# EUROPÄISCHE PATENTANMELDUNG

(11) **EP 1 593 615 A1**
(43) Veröffentlichungstag der Anmeldung: **09.11.2005**
(21) Anmeldenummer: 04405287.6
(22) Anmeldetag: 06.05.2004
(51) Int. Cl.: B65G 1/10, B65G 49/06

(54) **Lagervorrichtung**

(71) Anmelder: Bystronic Maschinen AG, CH-4922 Bützberg (CH)
(72) Erfinder: Fiechter, Roy, 3360 Heryogenbuchsee (CH)
(74) Vertreter: AMMANN PATENTANWÄLTE AG BERN

(57) **Zusammenfassung**

Gemäss einem ersten Aspekt der Erfindung umfasst die Lagervorrichtung zum Lagern von Platten, insbesondere Glasplatten, mindestens zwei in einer Verfahrrichtung verfahrbare Fahrgestelle (20, 20'), einen Antrieb (35) und einen Kopplungsmechanismus (38, 39, 50) zum wahlweise Koppeln des Antriebs an eines der Fahrgestelle. Gemäss einem zweiten Aspekt der Erfindung ist das Fahrgestell (20, 20') auf Führungen (90, 92) mit Wälzkörpern (91) gelagert.

## Beschreibung

Die vorliegende Erfindung betrifft eine Lagervorrichtung zum Lagern von Platten, insbesondere Glasplatten.

Aus der Patentschrift EP-A1-0 588 394 ist eine Lagervorrichtung mit Fahrgestellen bekannt, welche jeweils mit einem eigenen Antrieb versehen sind, um die Fahrgestelle einzeln verschieben zu können. Dieser Aufbau hat u.a. den Nachteil, dass er relativ teuer und aufwändig ist. Insbesondere sind die Steuerungsvorrichtung und Verkabelung, welche zur Ansteuerung bzw. Stromversorgung der einzelnen Antriebe erforderlich sind, relativ aufwändig und kompliziert, sodass ein störungsfreier und sicherer Betrieb der Lagervorrichtung erschwert ist.

In der Patentschrift EP-A2-0 749 916 ist eine Lagervorrichtung mit Fahrgestellen beschrieben, welche durch Kupplungen miteinander verbindbar sind. Die Lagervorrichtung ist mit einem einzigen Antrieb ausgerüstet, der zum Antreiben des vordersten Fahrgestells dient. Das Öffnen eines Durchgangs zwischen zwei beliebigen Fahrgestellen geschieht folgendermassen: Zuerst wird das vorderste Fahrgestell verschoben, bis alle Fahrgestelle aneinander gekoppelt sind. Dann wird die Kupplung zwischen den beiden Fahrgestellen gelöst, zwischen welchen der Durchgang geschaffen werden soll. Schliesslich wird die eine Gruppe der Fahrgestelle mittels des vordersten Fahrgestells wieder zurückgezogen, während die andere Gruppe der Fahrgestelle stehen bleibt. Diese Vorgehensweise hat den Nachteil, dass zum Öffnen zumindest das vorderste Fahrgestell zweimal verfahren werden muss und daher eine erhöhte Öffnungszeit resultiert. Dieser Nachteil macht sich besonders dann bemerkbar, wenn die eingelagerten Platten schwer sind und diese mehrmals verschoben werden müssen, um eine einzelne Platte auslagern oder einlagern zu können. Ein möglichst einfaches Umlagern ist beispielsweise in der Glasverarbeitungsindustrie erstrebenswert, da hier Glaspakete zu verschieben sind, die mehrere Tonnen wiegen können.

Zum Verfahren sind die Fahrgestelle der Lagervorrichtungen bekanntermassen mit Rollen oder Rädern versehen, welche auf Achsen gelagert sind. Damit die Fahrgestelle auch schwere Platten tragen können, müssen die Achsen sowie die Rollen bzw. Räder entsprechend gross ausgebildet sein. Dies hat den Nachteil, dass dadurch die Auflagefläche der Fahrgestelle relativ hoch über dem Boden zu liegen kommt und daher eine Platte zum Einlagern oder Auslagern vertikal entsprechend angehoben werden muss.

Ausgehend von diesem Stand der Technik ist es Aufgabe der vorliegenden Erfindung, eine einfachere Lagervorrichtung zu schaffen, welche das Einlagern bzw. Auslagern von insbesondere schweren Platten erleichtert.

Diese Aufgabe wird durch eine Lagervorrichtung gelöst, welche durch den ersten bzw. zweiten unabhängigen Vorrichtungsanspruch definiert ist. Die weiteren Ansprüche geben bevorzugte Ausführungen an.

Die Erfindung wird im Folgenden anhand eines Ausführungsbeispiels unter Bezugnahme auf Figuren erläutert.

Es zeigen
- Fig. 1: eine vereinfachte Seitenansicht der erfindungsgemässen Lagervorrichtung;
- Fig. 2: eine teilweise geschnittene Vorderansicht der Lagervorrichtung gemäss Fig. 1;
- Fig. 3: eine vereinfachte Draufsicht der Lagervorrichtung gemäss Fig. 1, wobei die eingelagerten Platten weggelassen sind; und
- Fig. 4: eine Detailansicht von Fig. 2 rechts unten.

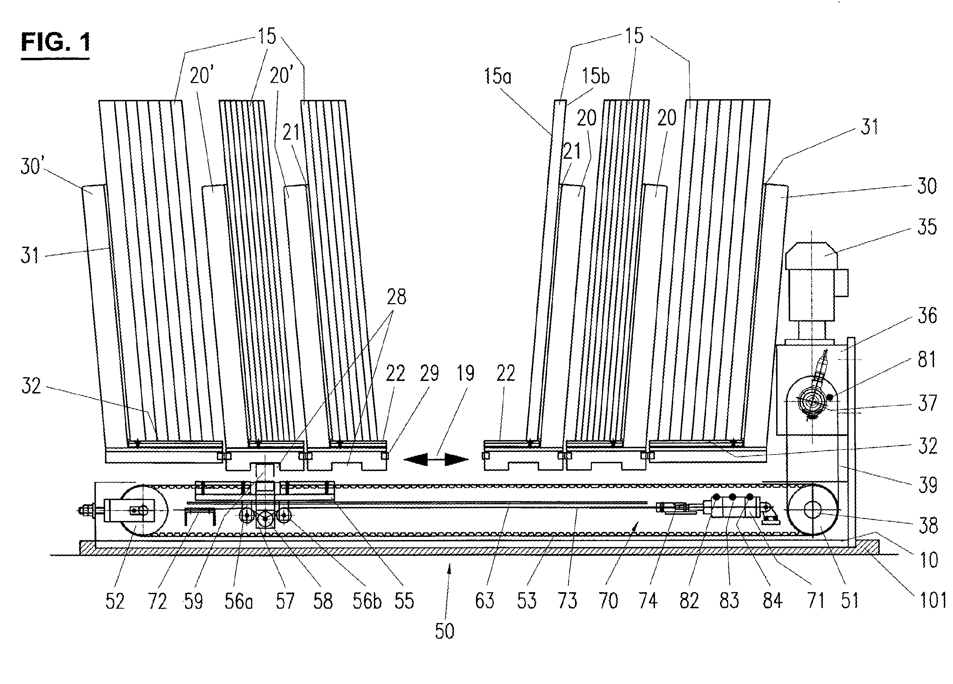

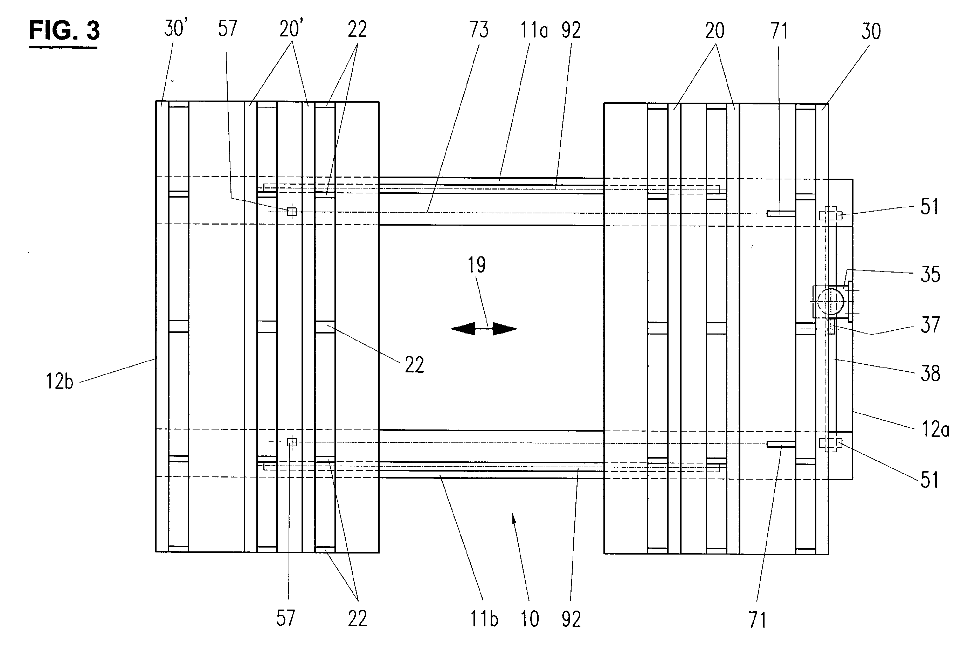

Wie aus den Fig. 1 bis 3 ersichtlich, umfasst die Lagervorrichtung einen Grundrahmen 10 mit zwei parallel angeordneten Trägereinheiten 11a und 11b, die jeweils endseitig mit Querträgern 12a und 12b verbunden sind, sowie eine Anzahl Fahrgestelle 20, 20', die auf dem Grundrahmen 10 verfahrbar angeordnet sind und die zur Aufnahme von einzelnen Platten 15 oder Stapeln von Platten 15 dienen. Die Fahrgestelle 20, 20' sind entlang den Trägereinheiten 11a und 11b in der Verfahrrichtung hin und her verschiebbar, wie dies durch den Doppelpfeil 19 in Fig. 1 bzw. 3 angedeutet ist.

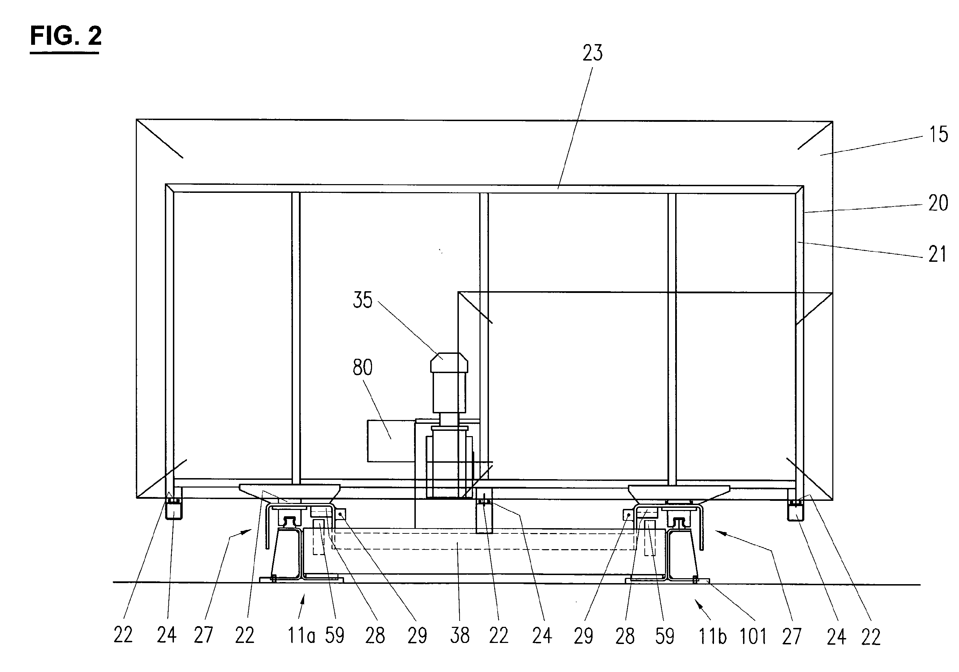

Die Fahrgestelle 20, 20' haben einen im Wesentlichen L-förmigen Querschnitt und umfassen Anlegeflächen 21, die im Wesentlichen vertikal ausgerichtet sind, sowie Auflageflächen 22, die im Wesentlichen horizontal ausgerichtet sind. Wie insbesondere Fig. 2 zeigt, dient ein mit Verstrebungen versehener Rahmen 23 als Anlegefläche 21. Der Rahmen 23 enthält unten Ausleger 24, die als Auflageflächen 22 dienen. Anlegeflächen 21 sowie Auflageflächen 22 sind mit Schutzmitteln beispielsweise in Form von Gummi- und/oder Filzauflagen versehen, um eine Beschädigung von eingelagerten Platten 15 zu verhindern.

Der Winkel zwischen den Anlegeflächen 21 und der Vertikalen ist im Bereich von 0 bis 45 Grad gewählt. Vorzugsweise ist der Winkel etwa im Bereich von 5 bis 10 Grad, sodass die jeweilige Auflagefläche 21 leicht gegenüber der Vertikalen geneigt ist, und das Vornüberkippen einer im Fahrgestell 20, 20' aufgenommenen Platte 15, insbesondere beim Anfahren bzw. Abbremsen des Fahrgestells 20, 20', verhindert wird.

Die Fahrgestelle 20, 20' weisen unten jeweils zwei Fahrwagen 27 auf, welche auf den Trägereinheiten 11a bzw. 11b des Grundrahmens 10 verfahrbar sind. Die Fahrwagen 27 sind jeweils unten mit einem Einrastteil 28 versehen, welches eine Nute umfasst, und haben vorne und hinten Dämpfungsmittel 29 beispielsweise in Form von Gummipuffern, sodass beim Zusammenstossen von benachbarten Fahrgestellen 20, 20' die Bewegung möglichst sanft abgebremst wird.

Anschliessend an das Fahrgestell 20' bzw. 20, welches sich gemäss Fig. 1 am weitesten links bzw. rechts befindet, ist jeweils ein Gestell 30' bzw. 30 fest auf dem Grundrahmen montiert, welches ebenfalls Anlegeflächen 31 und Auflageflächen 32 umfasst, die ähnlich wie die Anlegeflächen 21 bzw. Auflageflächen 22 ausgebildet sind.

Je nach Anwendungszweck kann die Anzahl der Fahrgestelle 20, 20' und die Ausrichtung der Anlegeflächen 21 entsprechend gewählt sein.

In der in Fig. 1 gezeigten Ausführungsform, weist die linke Gruppe der Fahrgestelle 20' nach links geneigte Anlegeflächen 21 auf, während die Anlegeflächen 21 bei der rechten Gruppe der Fahrgestelle 20 nach rechts geneigt sind, die Fahrgestelle 20 und 20' sind somit spiegelsymmetrisch angeordnet.

Diese Anordnung erleichtert beispielsweise das Umlagern von sowohl beschichteten als auch unbeschichteten Glasplatten auf eine Arbeitsstation. Angenommen auf den linken Fahrgestellen 20' befinden sich unbeschichtete Glasplatten 15, während die Glasplatten 15, welche sich auf den rechten Fahrgestellen 20 befinden, jeweils auf ihrer Rückseite 15b, d.h. der Anlegefläche 21 zugewandten Seite, mit einer Beschichtung versehen sind und auf ihrer Vorderseite 15a unbeschichtet sind. Zum Entnehmen einer beschichteten Glasplatte 15 werden z.B. Sauger auf die unbeschichtete Vorderseite 15a der Glasplatte 15 angebracht und diese auf eine Arbeitsstation übergeführt, sodass die beschichtete Seite 15b für eine Bearbeitung, beispielsweise zur teilweisen Entschichtung, zugänglich ist. Beim Verschieben der Glasplatte 15 bleibt demnach ihre beschichtete Seite 15b unberührt, sodass eine Beschädigung verhindert wird. Das Überführen einer unbeschichteten Glasplatte 15, die sich auf einem der linken Fahrgestelle 10 befindet, kann auf dieselbe Arbeitsstation ohne Verschwenken erfolgen.

Am vorderen, gemäss Fig. 1 rechten Ende des Grundrahmens 10 ist ein als Antrieb dienender Motor 35 mit einem Getriebe 36 und einer Abtriebswelle 37 fest montiert. Eine Vorgelegewelle 38 ist unterhalb des Antriebs 35 und im Wesentlichen senkrecht zur Verfahrrichtung 19 angeordnet. Die Vorgelegewelle 38 ist über einen Zahnriemen 39 durch den Motor 35 antreibbar, so dass sie mit der gewünschten Drehzahl und Drehrichtung in Rotation versetzbar ist.

Die Lagervorrichtung umfasst weiter zwei Verschiebeeinrichtungen 50, die entlang der beiden Trägereinheiten 11a und 11b angeordnet und im Wesentlichen gleich aufgebaut sind. Die Verschiebeeinrichtung 50 umfasst ein auf der Vorgelegewelle 38 fest angebrachtes Zahnrad 51, eine Umlenkrolle 52, welche am hinteren, gemäss Fig. 1 linken Ende des Grundrahmens 10 befestigt ist, sowie ein umlaufender Zahnriemen 53, welcher um das Zahnrad 51 und die Umlenkrolle 52 geführt ist.

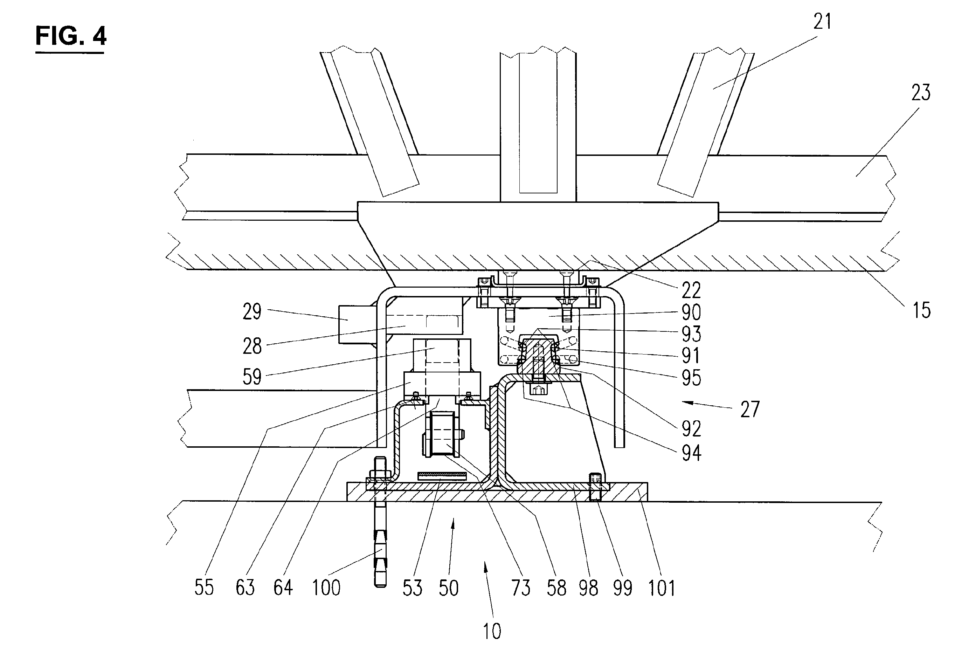

Am oberen Teil des Zahnriemens 53 ist ein Schlitten 55 festgeklemmt, an welchem zwei Umlenkrollen 56a und 56b befestigt sind. Zwischen den beiden Umlenkrollen 56a und 56b ist ein ausfahrbares Betätigungsteil 57 angeordnet, welches eine Umlenkrolle 58 und ein mit dieser verbundenen Bolzen 59 umfasst. Die Trägereinheit 11a bzw. 11b weist eine Gleitauflage 63 auf, entlang welcher der Schlitten 55 verfahrbar und welche, wie der Querschnitt in Fig. 4 zeigt, in der Mitte mit einem Schlitz 64 versehen ist, durch welche hindurch die Umlenkrollen 56a, 56b und 58 greifen.

Die Verschiebungseinrichtung 50 umfasst weiter Betätigungsmittel 70, welche zum Ein- und Ausfahren des Betätigungsteils 59 dienen und zwischen dem umlaufenden Zahnriemen 53 angeordnet sind. Die Betätigungsmittel 70 enthalten einen neben dem Zahnrad 51 befestigten Aktuator 71 und eine neben der Umlenkrolle 52 befestigte Halterung 72 sowie einen Zugriemen 73, welcher endseitig am Aktuator 71 bzw. an der Halterung 72 befestigt und um die Umlenkrollen 56a, 56b und 58 geführt ist. Als Aktuator 71 ist ein pneumatischer Linearantrieb geeignet, um das Ende 74 des Zugriemens 73 aus- und einzufahren. Zu diesem Zweck umfasst der Linearantrieb einen Zylinder, in welchem ein Kolben mittels Druckluft verschiebbar angeordnet ist.

Die Verschiebeeinrichtungen 50 zusammen mit der Welle 38, dem Zahnriemen 39 und dem Getriebe 36 sind Teil eines Kopplungsmechanismus, welcher es ermöglicht, wahlweise eines der Fahrgestelle 20, 20' an den Antrieb 35 zu koppeln und zu verfahren.

Die Anzahl der Verschiebeeinrichtungen 50 braucht nicht zwingendermassen zwei zu sein, sondern kann je nach Anwendungszweck der Lagervorrichtung auch drei oder mehr sein. Unter Umständen reicht auch eine Verschiebeeinrichtung 50, die in der Mitte zwischen den beiden Trägereinheiten 11a, 11b angeordnet ist, z.B. dann, wenn die Lagervorrichtung zur Lagerung von leichten Platten vorgesehen ist.

Die Fahrgestelle 20, 20' sowie die festen Gestelle 30, 30' sind im Folgenden auch als Fach bezeichnet. Als Öffnen eines Faches ist das Schaffen eines Durchgangs zwischen zwei Fahrgestellen 20, 20' beziehungsweise zwischen einem Fahrgestell 20, 20' und einem festen Gestell 30, 30' zu verstehen, indem die Fahrgestelle 20, 20' entsprechend verschoben werden.

Das Öffnen eines Faches geschieht folgendermassen:

Als Beispiel sei angenommen, dass die beiden mittleren Fächer in der Mitte geöffnet sind, wie dies in Fig. 1 gezeigt ist, und dass das Fach geöffnet werden soll, welches sich in der Fig. 1 ganz links befindet.

Da die Verschiebeeinrichtungen 50 auf gleiche Weise und synchron betrieben werden, um ein gleichmässiges Verfahren der Fahrgestelle 20, 20' zu gewährleisten und insbesondere ein Verkanten der Fahrwagen 27 zu verhindern, wird der Einfachheit halber im Folgenden lediglich der Ablauf an einer Verschiebeeinrichtung 50 erläutert.

Der Schlitten 55 wird durch Antreiben der Vorgelegewelle 38 soweit verfahren, bis das Betätigungsteil 57 sich gegenüber der Einrastnute 28 des Fahrgestells 20' links aussen befindet. Der Schlitten 55 ist dann in der in Fig. 1 gezeigten Position. Der Aktuator 71 wird betätigt, sodass der Zugriemen 73 zum Aktuator 71 hin gezogen wird, wodurch das Betätigungsteil 57 nach oben verschoben und der Bolzen 59 ausgefahren wird, bis er in die Einrastnute 28 des Fahrgestells 20' greift. Dieses kann nun durch Antreiben der Welle 38 verschoben werden, wobei das benachbarte Fahrgestell 20' ebenfalls verschoben wird, bis der vorige Durchgang in der Mitte geschlossen ist und alle Fahrgestelle 20, 20' aneinander geschoben sind. Das Fach links aussen ist nun offen, sodass genügend Platz ist, um beispielsweise mittels eines Portalkrans eine Platte 15 aus dem geöffneten Fach zu entnehmen oder eine Platte oder einen Plattenstapel im Fach einzulagern.

Das Vorsehen des Kopplungsmechanimus ermöglicht es, zum Öffnen eines bestimmten Faches das dazu benachbarte Fahrgestell 20, 20' am Antrieb 35 anzukoppeln und anzutreiben. Beim Verfahren stösst das angetriebene Fahrgestell 20, 20' die in der Verfahrrichtung liegenden Fahrgestelle 20, 20' weg, sodass sich der Durchgang auf der rückwärtigen Seite des angetriebenen Fahrgestells 20, 20' öffnet.

Im Gegensatz zu den bekannten, in der Einleitung erwähnten Lagervorrichtungen mit nur einem Antrieb, bei welchen die Fahrgestelle durch Kupplungen miteinander verbindbar sind, ist es bei der erfindungsgemässen Lagervorrichtung nicht erforderlich, zuerst alle Fahrgestelle 20, 20' zusammenzuschieben, sondern es kann direkt das gewünschte Fach geöffnet werden. Die Fahrgestelle 20, 20' brauchen daher nicht mehr als nötig verschoben werden, was besonders vorteilhaft ist, wenn schwere Platten 15 eingelagert sind. Die Fachöffnungszeit kann wesentlich reduziert werden und so das Umlagern von Platten rascher erfolgen.

Die Fahrgestelle 20, 20' sind vorzugsweise gleich aufgebaut, sodass die Ausrichtung eines Fahrgestells 20, 20' frei wählbar ist. Bei Bedarf kann ein Fahrgestell 20, 20' vom Grundrahmen 10 angehoben, um 180 Grad gedreht und wieder auf den Grundrahmen 10 aufgesetzt werden. Bei der in der in Fig. 1 gezeigten Ausführungsform könnte z.B. die Ausrichtung der Fahrgestelle 20, 20' so gewählt werden, dass alle Anlegeflächen 21 auf dieselbe Seite geneigt sind. Das Umdrehen eines Fahrgestells 20, 20' erfordert keine baulichen Veränderungen. Insbesondere ist das Einrasten des jeweiligen Bolzens 59 in die Einrastnute 28 nach wie vor möglich. Bei den bekannten Fahrgestellen hingegen, die mit Kupplungen versehen sind, müssten nach einem Umdrehen auch die Kupplungen ausgewechselt werden.

Die Lagervorrichtung ist zur Steuerung mit einer Steuereinheit 80 und einem damit verbundenen Sensor 81 ausgestattet, mittels welchem der zurückgelegte Verfahrweg sowie die Verfahrrichtung der jeweiligen Schlitten 55 und somit die Position der jeweiligen Betätigungsteile 59 bestimmt werden kann. Als Sensor 81 eignet sich z.B. ein Absolutdrehgeber, mittels welchem der Rotationswinkel und die Rotationsrichtung der Abtriebswelle 37 des Motors 35 erfasst werden kann. Aus der gegebenen Geometrie der Komponenten des Kopplungsmechanismus (Getriebe 36, Zahnriemen 39, Zahnrad 51, Schlitten 55, etc.) ermittelt die Steuereinheit 80 aus dem vom Sensor 81 gelieferten Signal die jeweils aktuelle Position des Betätigungsteils 59.

Im Weiteren kann mittels der Steuereinheit 80 die aktuelle Motorenleistung erfasst werden, beispielsweise durch Messen des Laststroms, um den Antrieb 35 ansteuern zu können. Wird nämlich das angetriebene Fahrgestell 20, 20' soweit verfahren, bis alle in Verfahrrichtung liegenden Fahrgestelle 20, 20' zusammengeschoben sind, wird es blockiert, sodass die auf den Motor 35 wirkende Last stark zunimmt und die Motorenleistung entsprechend sinkt. Die Steuereinheit 80 erfasst diese Abnahme der Motorenleistung und schaltet den Motor 35 aus.

Die Steuereinheit 80 umfasst weiter einen elektronischen Speicher, um Informationen über Anzahl und Dimensionen der Fahrgestelle 20, 20' sowie die Position des aktuell geöffneten Faches zu speichern. Aus diesen Daten kann die Steuereinheit 80 die aktuelle Position der einzelnen Fahrgestelle 20, 20' bestimmen, sodass zum Öffnen eines bestimmten Faches die Betätigungsteile 57 gezielt an die richtige Position verfahren werden können.

Folgende Vorgehensweise kann zur Kontrolle verwendet, dass nach dem Öffnen eines Faches, der Durchgang zwischen den beiden entsprechenden Fahrgestellen 20, 20' wirklich frei ist und ihre "wahren Positionen" mit den von der Steuereinheit 80 berechneten Positionen übereinstimmen:

Die Betätigungsteile 57 werden zwischen das geöffnete Fach verschoben, herausgefahren und jeweils so weit nach vorne und hinten verschoben, bis sie durch das entsprechende Fahrgestell 20, 20' blockiert werden, wodurch, wie oben erklärt, die Motorenleistung abfällt. Aus dem jeweiligen auftretenden Leistungsabfall bestimmt die Steuereinheit 80 die "wahre Position" des geöffneten Durchganges und vergleicht sie mit der zu erwartenden Position. Weichen die Werte mehr als einen vorgegebenen Toleranzwert ab, liegt eine Störung vor, und es wird ein Störsignal erzeugt.

Die Steuereinheit 80 steht mit den Aktuatoren 71 zu ihrer Ansteuerung in Wirkverbindung. Wie Fig. 1 schematisch zeigt, umfasst der Aktuator 71 der jeweiligen Verschiebeeinrichtungen 50 Sensoren 82, 83, 84, z.B. in Form von Endschaltern, die ebenfalls mit der Steuereinheit 80 verbunden sind. Die Sensoren 82 und 83 dienen zum Erfassen der ausgefahrenen bzw. eingefahrenen Position des Betätigungsteils 57. Der Sensor 84 dient zur Überwachung des Zustandes des Zugriemens 73. Im Falle, dass z.B. der Zugriemen 73 gerissen oder nicht mehr in der Halterung 72 verankert oder aus einem anderen Grund nicht mehr richtig gespannt wäre, würde der Kolben des Aktuators 71 ganz eingefahren. Der Sensor 84 ist so angeordnet, dass er im Störfall diese ganz eingefahrene Position erkennt und geschaltet wird.

Wenn das angetriebene Fahrgestell 20, 20' verfahren wird, ist bei einem fehlerfreien Betrieb der Bolzen 59 herausgefahren bzw. der Zugriemen 73 eingefahren, sodass der mittlere Sensor 83, aber nicht die beiden anderen Sensoren 82 und 84 geschaltet sind. Wird jedoch beim Verfahren des Fahrgestelles entweder der Sensor 82 oder Sensor 84 geschaltet, so liegt eine Störung vor, und der Betrieb der Lagervorrichtung wird unmittelbar unterbrochen.

Die oben beschriebene Konzeption von Kopplungsmechanismus und Steuerung weist u.a. folgende Vorteile auf:
- Der Kopplungsmechanismus ist in seiner Konstruktion relativ einfach und kostengünstig.
- Der Kopplungsmechanismus ermöglicht es, gezielt ein Fahrgestell 20, 20' anzutreiben. Zum Öffnen eines beliebigen Faches ist ein Antrieb 35 ausreichend.
- Zum Öffnen eines Faches müssen die Fahrgestelle 20, 20' nicht mehr als nötig verschoben werden. Die Fachöffnungszeiten sind relativ klein.
- Es sind keine elektrischen Zuleitungen oder sonstige Steuerleitungen zu den Fahrgestellen 20, 20' oder Betätigungsteilen 57 erforderlich, was u.a. hinsichtlich Robustheit und Sicherheit der Lagervorrichtung besonders vorteilhaft ist. Antrieb 35, Steuerung 80, Aktuator 71 sowie Stromspeisung sind konzentriert auf der einen Seite der Lagervorrichtung angeordnet.
- Steuerung und Sensorik sind relativ einfach aufgebaut und somit die Gefahr von Störungen reduziert. Insbesondere brauchen bei der Steuerung des Kopplungsmechanimus die Fahrgestelle 20, 20' nicht mit Sensoren ausgerüstet sein.
- Die Ausrichtung der Fahrgestelle 20, 20' ist frei wählbar.

Weitere Vorteile ergeben sich aus der Art der verwendeten Führungen, die nachfolgend genauer erläutert werden.

Um den Fahrgestellen beim Verfahren eine genaue lineare Bewegungsbahn vorzugeben sind die Führungen als Linearführungen mit Wälzkörpern ausgebildet.

Wie Fig. 4 zeigt, umfasst der Fahrwagen 27 einen Führungswagen 90, der mittels Kugeln 91 als Wälzkörper auf einer Führungsschiene 92 verfahrbar gelagert ist. Die Führungsschiene 92 weist beidseitig eine obere Anschlagkante 93 und untere Anschlagkante 94 auf. Der Führungswagen 90 hat einen U-förmigen Querschnitt und umfasst gemäss dem in Fig. 4 gezeigten Beispiel vier Kugelreihen.

Die Anzahl der Kugelreihen braucht nicht unbedingt vier zu sein. Je nach Anwendungszweck sind auch Ausführungen mit zwei oder mehr als vier Kugelreihen denkbar.

Der Führungswagen 90 ist im Inneren mit Kanälen 95 versehen, welche vom vorderen zum hinteren Ende des Führungswagens 90 führen, sodass die Kugeln 91 jeder Reihe auf einer endlosen Schleife laufen können.

Beim Verfahren des Führungswagens 90 rollen die Kugeln 91 entlang den Anschlagkanten 93 bzw. 94 ab, bis sie am Ende des Führungswagens 90 im Kanal 95 verschwinden und im Innern auf die andere Seite des Führungswagens 90 geführt werden. Die Schleifen sind mit Kugeln 91 aufgefüllt, sodass sich beim Verschieben des Führungswagen 90 zwischen diesem und den Anschlagkanten 93, 94 immer eine Vielzahl von Kugeln 91 befindet.

Zum Lagern des Führungswagens 90 sind nebst kugelförmigen Wälzkörpern auch Wälzkörper anderer Form verwendbar, die in Schleifen umlaufend angeordnet sind, beispielsweise zylinderförmige und/oder tonnenförmige Wälzkörper.

Wie Fig. 4 weiter zeigt, umfasst der Grundrahmen 10 einen Schienenträger 98, der neben der Gleitauflage 63 für den Schlitten 55 angeordnet ist. Der Schienenträger 98 weist einen U-förmigen Querschnitt auf, wobei der eine Schenkel auf dem Boden aufliegt und der andere Schenkel als Stütze für die Führungsschiene 92 dient.

Der Grundrahmen 10 mit den Gleitauflagen 63 und den Schienenträgern 98 ist z.B. durch Zusammenschweissen von Flacheisen und/oder Biegen von Blechen geeigneter Dicke hergestellt. Entlang des Grundrahmens 10 sind Stellschrauben 99 vorgesehen, um die Gleitauflagen 63 und die Führungsschienen 98 in waagrechter Lage ausrichten zu können. Mittels Verankerungen 100 z.B. in Form von Expressankern ist der Grundrahmen 10 fest mit dem Boden verbunden. Um Unebenheiten im Boden auszugleichen, ist um den Grundrahmen herum ein Sockel 101 aus geeigneter Giessmasse gegossen. Der so montierte Grundrahmen 10 bildet einen starren Träger, der sich auch bei hohen Belastungen nicht verzieht, sodass insbesondere die beiden Führungsschienen 92 immerzu waagrecht und parallel zueinander ausgerichtet bleiben.

Die Ausbildung der Führungen als Linearführungen mit umlaufenden Wälzkörpern weist u.a. folgende Vorteile auf:
- Die Wälzkörper sind achsenfrei gelagert. Die Führungen können daher kompakter gebaut werden als z.B. die üblicherweise verwendeten Führungen mit auf Achsen laufenden Rädern. Insbesondere ist die Höhe zwischen Boden und Auflagefläche reduziert. Das Ein- und Auslagern von Platten wird dadurch erleichtert, da sie in reduziertem Masse angehoben werden müssen.
- Die Reibung ist niedrig, sodass die Führungen gute Laufeigenschaften aufweisen. Die erforderliche Verschiebekraft ist geringer als z.B. bei Ausführungen mit Rädern. Zum Verfahren der Fahrgestelle 20, 20' ist daher ein leistungsärmerer Antrieb 35 als üblich ausreichend.
- Die Führungen weisen eine hohe Steifigkeit auf und können Druck-, Zug- und Seitenkräfte aufnehmen. Insbesondere gewährleisten sie, dass auch bei einer hohen Belastung der Anlegeflächen 21 das Fahrgestell 20, 20' nicht nach hinten kippt, sondern nach wie vor auf sichere Art und Weise verschoben werden kann.

Die soeben beschriebenen Linearführungen brauchen nicht zwingendermassen mit dem oben beschriebenen Kopplungsmechanismus eingesetzt zu werden, sondern können ganz allgemein bei Lagervorrichtungen verwendet werden, welche mindestens ein verfahrbares Fahrgestell 20, 20' aufweisen.

Die erfindungsgemässe Lagervorrichtung ist geeignet zum platzsparenden Lagern von Platten verschiedener Abmessungen und Arten. Beispielsweise eignet sich die Lagervorrichtung als Kompaktlager für Glasplatten, wie sie in der Glasverarbeitungsindustrie verarbeitet werden. Solche Glasplatten haben typischerweise eine Länge von 600 cm und eine Breite von 321 cm und können bis zu einer Tonne oder noch mehr schwer sein. Ein Fahrgestell kann so ausgelegt sein, dass es ohne Weiteres Glaspakete bis zu einem Gesamtgewicht von ca. 25 Tonnen aufnehmen kann.

## Patentansprüche

1. Lagervorrichtung zum Lagern von Platten, insbesondere Glasplatten, mit mindestens zwei in einer Verfahrrichtung verfahrbaren Fahrgestellen und mit einem Antrieb, **gekennzeichnet durch** einen Kopplungsmechanismus (38, 39, 50) zum wahlweise Koppeln des Antriebs (35) an eines der Fahrgestelle (20, 20').

2. Lagervorrichtung nach Anspruch 1, **dadurch gekennzeichnet, dass** der Antrieb (35) fest ist,
der Kopplungsmechanismus mindestens ein in Verfahrrichtung (19) verfahrbares Betätigungsteil (57, 59) umfasst, und
die Fahrgestelle (20, 20') jeweils mindestens ein Einrastteil (28) umfassen, welches mit dem Betätigungsteil koppelbar ist.

3. Lagervorrichtung nach Anspruch 2, **dadurch gekennzeichnet, dass** das Betätigungsteil (57) einen ausfahrbaren Bolzen (59) und das Einrastteil ein Nute (28) umfasst.

4. Lagervorrichtung nach einem der Ansprüche 1 bis 3, **dadurch gekennzeichnet, dass** der Kopplungsmechanismus mindestens eine Aktuator (71) umfasst, welcher über einen Riemen (73) mit dem Betätigungsteil (57, 59) in Wirkverbindung steht.

5. Lagervorrichtung nach einem der Ansprüche 1 bis 4, **gekennzeichnet durch** eine Steuereinheit (35) zum wiederholten Erfassen der vom Antrieb (35) erbrachten Leistung und zum Steuern des Antriebs in Abhängigkeit der Leistung.

6. Lagervorrichtung, insbesondere nach einem der Ansprüche 1 bis 5, mit mindestens einem Fahrgestell zum Lagern von Platten, **dadurch gekennzeichnet, dass** das Fahrgestell (20, 20') auf Führungen (90, 92) mit Wälzkörpern (91) gelagert ist.

7. Lagervorrichtung nach Anspruch 6, **dadurch gekennzeichnet, dass** die Führungen (90, 92) Schleifen (95) umfassen, in welchen die Wälzkörper (91) umlaufend angeordnet sind.

8. Lagervorrichtung nach einem der Ansprüche 6 bis 7, **dadurch gekennzeichnet, dass** die Führungen mindestens einen Führungswagen (90) mit mindestens zwei Wälzkörperreihen (95) und mindestens eine Führungsschiene (91) umfassen, welche zwischen den Wälzkörperreihen angeordnet ist.

9. Lagervorrichtung nach einem der Ansprüche 1 bis 8, **dadurch gekennzeichnet, dass** das Fahrgestell (20, 20') durch zwei Führungswagen(90) verfahrbar gelagert ist, welche jeweils vier Wälzkörperreihen (95) umfassen.

10. Lagervorrichtung nach einem der Ansprüche 1 bis 9, **dadurch gekennzeichnet, dass** die Fahrgestelle (20, 20') gegenüber der Vertikalen geneigte Anlegeflächen (21) aufweisen, die quer zur Verfahrrichtung (19) angeordnet sind.
